# EUROPÄISCHE PATENTANMELDUNG

(11) **EP 4 745 800 A1**
(43) Veröffentlichungstag der Anmeldung: **20.05.2026**
(21) Anmeldenummer: 24213660.4
(22) Anmeldetag: 18.11.2024
(51) Int. Cl.: G06F 16/9032, G06F 16/9035

(54) **VERFAHREN ZUR AUTOMATISIERTEN UND KONTEXTSENSITIVEN DATENAUFBEREITUNG**

(71) Anmelder: Relefant GmbH, 63512 Hainburg (DE)
(72) Erfinder: Kreimeyer, Ulrich, 63512 Hainburg (DE); Kreimeyer, Jan, 63512 Hainburg (DE)
(74) Vertreter: Dr. Langfinger & Partner

(57) **Zusammenfassung**

Die vorliegende Erfindung betrifft ein Verfahren zum Erfassen, Aufbereiten und Darstellen von Daten unter Verwendung einer Künstlichen Intelligenz (KI), umfassend die folgenden Schritte:
a) Ermitteln von für einen Benutzer relevanten Kontextinformationen, die auf Basis von Benutzerdaten, Benutzereingaben, gespeicherten Informationen und/oder Umgebungsbedingungen generiert werden;
b) Analysieren der Kontextinformationen mittels eines Algorithmus unter Einsatz von KI, um relevante Themen, Ideen und/oder Anregungen zu identifizieren, die geeignet sind, den Benutzer zur weiteren Dateneingabe anzuregen;
c) Generieren einer oder mehrerer personalisierter Vorschläge basierend auf der Analyse der Kontextinformationen, wobei die Vorschläge spezifisch auf die ermittelten Themen oder Interessen des Benutzers abgestimmt sind;
d) Automatisches Bereitstellen der generierten Vorschläge an den Benutzer in Form einer sprachliche, textlichen, haptischen und/oder bildlichen Ausgabe,
e) Erfassen von Eingaben des Benutzers in Reaktion auf die generierte Ausgabe.

## Beschreibung

Die vorliegende Erfindung betrifft ein Verfahren zur automatisierten und kontextsensitiven Datenaufbereitung.

Traditionelle Datenverarbeitungssysteme weisen den Nachteil auf, dass große Mengen an Informationen nicht effizient verarbeitet werden und dem Benutzer keine oder wenig relevante Ergebnisse präsentiert werden, ohne dass der Benutzer umfassend und eigenständig mit dem System interagieren und dieses Anleiten muss.

Diese klassischen Systeme basieren häufig auf festen, regelbasierten Algorithmen, die unabhängig vom individuellen Benutzerkontext operieren. Dadurch fehlt ihnen die Flexibilität, auf spezifische Interessen oder Situationen des Benutzers einzugehen, was oft zu einer Überflutung mit irrelevanten Daten oder zu verpassten, potenziell wichtigen Informationen führt. Die unzureichende Berücksichtigung des Kontextes des Benutzers kann die Benutzererfahrung beeinträchtigen und den praktischen Nutzen solcher Systeme masssiv verringern.

Um benutzerrelevanten Kontext berücksichtigen zu können, nutzen neuere Verfahren und Systeme daher zunehmend Künstliche Intelligenz (KI), um die Relevanz und Effizienz der Datenverarbeitung zu verbessern.

KI-gestützte Algorithmen können Muster und Beziehungen innerhalb großer Datenmengen erkennen und damit die Ergebnisse besser an die Bedürfnisse des Benutzers anpassen.

Obwohl KI-Systeme eine fortschrittlichere Form der Datenaufbereitung bieten, sind sie oft komplex in ihrer Implementierung und benötigen große Mengen an Trainingsdaten, um zuverlässig zu funktionieren. Zudem können sie in ihrer Entscheidungsfindung intransparent sein, was bei datenintensiven Anwendungen zu Herausforderungen führt, wenn unklar ist, was und warum gehandelt wird.

Eine Herausforderung ist es dabei insbesondere, Menschen strukturiert anzusprechen und aus sehr wenigen oder gerade sehr vielen Daten, die in einem System hinterlegt sind, mit ihnen zu interagieren. Dies ist insbesondere bei der strukturierten Erfassung von Informationen eines Benutzers und dessen Anregung zum Bereitstellen weiterer Informationen wichtig.

Es gibt im Stand der Technik Verfahren und Vorrichtungen, die beispielsweise einen Benutzer dabei unterstützen, gesprochenen Text automatisiert zu erfassen, zu dokumentieren und dann mit Hilfe von künstlicher Intelligenz vorzustrukturieren und textlich oder multi-medial gestützt aufzubereiten in dem beispielsweise Fotos oder Videos integriert werden.

Dies ist jedoch ein passiver Einsatz von künstlicher Intelligenz, da der Benutzer nicht gezielt von dem System angeregt wird, mit diesem zu interagieren und Informationen einzugeben. Wenn ein Benutzer nicht weiß, was er Eingeben soll, scheitern die aus dem Stand der Technik bekannten System bereits am Anfang, da keine relevanten Informationen dem System zur Verfügung gestellt werden können. Diese Systeme agieren daher mehr wie ein klassischer Assistent, der das eingegebene strukturiert aufschreibt, aber nicht mehr.

Es wäre daher wünschenswert, wenn es ein Verfahren gäbe, bei dem der Benutzer basierend auf minimalen Informationen, einem üblichen Informationsumfang oder sehr vielen Informationen aktiv angeregt würde, zu einem bestimmten Thema inhaltlich beizutragen. Dabei soll die Hürde für eine Interaktion mit dem System möglichst gering sein und keine technischen Vorerfahrungen voraussetzen. Ebenso sollte eine Barrierefreiheit gegeben sein.

Die Aufgabe der vorliegenden Erfindung ist es daher, ein Verfahren zum Aufbereiten und Darstellen von Daten unter Verwendung einer Künstlichen Intelligenz zu liefern, mit Hilfe dessen ein Benutzer zu einem Thema automatisiert angeregt wird, Informationen in einem interaktiven Prozess bereitzustellen.

Diese Aufgabe wird gelöst durch ein Verfahren zum Erfassen, Aufbereiten und Darstellen von Daten unter Verwendung einer Künstlichen Intelligenz (KI), umfassend die folgenden Schritte:
a) Ermitteln von für einen Benutzer relevanten Kontextinformationen, die auf Basis von Benutzerdaten, Benutzereingaben, gespeicherten Informationen und/oder Umgebungsbedingungen generiert werden;
b) Analysieren der Kontextinformationen mittels eines Algorithmus unter Einsatz von KI, um relevante Themen, Ideen und/oder Anregungen zu identifizieren, die geeignet sind, den Benutzer zur weiteren Dateneingabe anzuregen;
c) Generieren einer oder mehrerer personalisierter Vorschläge basierend auf der Analyse der Kontextinformationen, wobei die Vorschläge spezifisch auf die ermittelten Themen oder Interessen des Benutzers abgestimmt sind;
d) Automatisches Bereitstellen der generierten Vorschläge an den Benutzer in Form einer sprachliche, textlichen, haptischen und/oder bildlichen Ausgabe,
e) Erfassen von Eingaben des Benutzers in Reaktion auf die generierte Ausgabe.

Die überraschende Erkenntnis der vorliegenden Erfindung liegt nunmehr darin, dass ein Benutzer gezielt dazu angeregt werden kann, sich an bestimmte Ereignisse zu Erinnern, um diese im Ansc Ermitteln von für einen Benutzer relevanten Kontextinformationen, die auf Basis von Benutzerdaten, Benutzereingaben, gespeicherten Informationen und/oder Umgebungsbedingungen generiert werden hluss strukturiert zu erfassen.

Das erfindungsgemäße Verfahren löst dabei das technische Problem, wie große Mengen an Kontextinformationen effizient verarbeitet und benutzerrelevante Vorschläge automatisch generiert werden können, um die Eingabe weiterer Daten anzuregen.

Die erfindungsgemäße technische Lösung besteht nunmher darin, Daten so aufzubereiten, dass sie einen Benutzer gezielt zur strukturierten Dokumentation seiner Erinnerungen anregen, was über eine einfache Datenanzeige hinausgeht. Die Kombination aus KI-gestützter Analyse, dem Generieren personalisierter Vorschläge und der unmittelbaren Ausgabe stellt dabei die technische Lösung gemäß der vorliegenden Erfindung dar.

Der Einsatz von KI zur Analyse von Kontextinformationen und die automatische Ausgabe personalisierter Vorschläge erfordern eine systematische und strukturierte Verarbeitung, die über eine rein algorithmische Lösung hinausgeht und die Systemressourcen effizient nutzt.

Das erfindungsgemäße Verfahren sorgt daher für eine optimierte Datenverarbeitung und Anzeigelogik, die in klassischen Softwarelösungen ohne KI nicht vorhanden ist. Dabei interagiert das erfindungsgemäße Verfahren auf systematische Weise mit technischen Systemen.

Die KI übernimmt Aufgaben der Analyse und Erkennung von Kontextinformationen, die eine rein manuelle Verarbeitung erheblich übersteigen würden. Die menschliche Interaktion unterstützt hier die technischen Prozesse und verbessert kontinuierlich die Genauigkeit der KI-Analysen. Dieser Aspekt trägt zur technischen Lösung bei, da der Interaktionsprozess systematisch und automatisch gesteuert wird.

Die Interaktion zwischen Benutzerdaten und dem KI-Algorithmus ist nicht auf ein abstraktes Verfahren begrenzt, sondern stützt sich auf technische Mittel wie Speicherverwaltung, die Verarbeitung von Sensordaten und eine situationsbedingte Darstellung der Inhalte. Die Erfindung erzeugt einen technischen Effekt, da die kontextabhängige Datendarstellung und -analyse automatisiert und technisch durchgeführt wird.

Das erfindungsgemäße Verfahren liefert somit eine Lösung für die gestellte Aufgabe einer automatisierten und kontextsensitiven Datenaufbereitung, die durch menschliche Interaktion optimiert wird.

Hierzu hat es sich gemäß der Erfindung als vorteilhaft erwiesen, wenn zunächst relevante Kontextinformationen generiert werden. Benutzerdaten umfassen dabei alle Informationen, die spezifisch für den Benutzer gespeichert sind, wie z. B. persönliche Präferenzen, Interessen, frühere Interaktionen und Verhaltensmuster.

Neben diesen Informationen können Benutzerdaten auch demografische Informationen sein, wie Alter, Geschlecht, Spracheinstellungen und frühere Themen, die der Benutzer interessant fand. Dabei können Benutzerdaten vom Benutzer selber eingegeben worden sein, müssen aber nicht. Es ist gemäß dem erfindungsgemäßen Verfahren ebenfalls vorgesehen, dass Dritte diese Informationen für einen Benutzer hinterlegen bzw. eingeben.

Benutzereingaben im Gegensatz zu den vorab beschriebenen Benutzerdaten umfassen alle Interaktionen und Informationen, die der Benutzer selbst aktiv in das System eingegeben hat, z. B. Suchanfragen, Antworten auf Fragen, Präferenzen oder Feedback auf Vorschläge. Auch spontane Eingaben oder Stichworte, die der Benutzer bei bei früheren Interaktionen verwendet hat, zählen dazu.

Gespeicherte Informationen gemäß der vorliegenden Erfindung umfassen alle Daten, die im Verlauf der Nutzung gesammelt und archiviert wurden, wie z. B. frühere Interaktionen / Nutzung des Verfahrens, archivierte Notizen, abgeschlossene Aufgaben oder spezifische Themen, die der Benutzer in der Vergangenheit angelegt hat. Auch systemseitig gespeicherte Ereignisse oder Meilensteine können dazugehören.

Indem das erfindungsgemäße Verfahren auch optional auf archivierte Daten zugreift, kann es Anknüpfungspunkte zu früheren Themen oder Erinnerungen finden, die für den Benutzer noch relevant sein könnten. Zum Beispiel könnte es Vorschläge machen, die auf einem früher erstellten Thema aufbauen, oder an Themen erinnern, die für den Benutzer wichtig waren. Dies schafft Kontinuität und hilft, Informationen und Themen zu organisieren, die der Benutzer möglicherweise weiterentwickeln möchte.

Umgebungsbedingungen gemäß der vorliegenden Erfindung beziehen sich auf Faktoren wie den aktuellen Standort des Benutzers, die Tageszeit, das Wetter, das verwendete Gerät (Smartphone, Laptop etc.) und andere externe Faktoren, die den Kontext des Benutzers beeinflussen können. Beispielsweise kann es sinnvoll sein, jahreszeitlich Daten zu kontextualisieren, beispielsweise im Dezember Weihnachten und/oder im Frühjar Ostern. Es kann auch sein, dass bestimmte Ereignisse wie Olympia oder Weltmeisterschaften Anknüpfungspunkte bieten.

Es kann somit erfindungsgemäß verschiedene Möglichkeiten geben, die erfindungsgemäßen relevanten Kontextinformationen zu gewinnen. Eine Möglichkeit besteht darin, das Daten zu einem Benutzer direkt erfasst sind, die Benutzerdaten. Eine andere Möglichkeit besteht darin, dass der Benutzer selber Eingaben vornimmt. Die weitere Mögichkeit ist, dass auf gespeicherte Informationen und/oder Kontextdaten zurückgegriffen wird. Dies ermöglich somit, dass basierend auf einer sehr geringen Datenmenge, bespielsweise es ist Ostern, eine Interaktion angestoßen wird oder ausgehend von einer sehr umfassenden Datenmenge. Dies wird nachfolgend an einem Ausführungsbeispiel noch näher erläutert.

Nach dem die relevanten Kontextinformationen als Startpunkt ermittelt wurden, werden diesen mittels eines Algorithmus unter Einsatz von KI analysiert, um relevante Themen, Ideen und/oder Anregungen zu identifizieren, die geeignet sind, den Benutzer zur weiteren Dateneingabe anzuregen.

Solche Vorschläge können durch die Identifikation von Themen oder Schlüsselbegriffen in den bereits eingegebenen Daten erzeugt werden und auf die Interessen und Präferenzen des Benutzers abgestimmt sein. Dies stellt sicher, dass die Inhalte, die das System vorschlägt, einen hohen Nutzwert für den Benutzer haben und ihn gezielt zu weiteren Eingaben anregen.

Die Künstliche Intelligenz (KI) kommt gemäß derm erfindungsgemäßen Verfahren als zentraler Bestandteil der Analyse- und Personalisierungsmechanismen zum Einsatz. Ihr Hauptziel besteht darin, die Kontextinformationen des Benutzers kontinuierlich zu verarbeiten und daraus individuelle Vorschläge zu erstellen, die den Benutzer zur weiteren Interaktion und Dateneingabe motivieren.

Die KI übernimmt dabei die dynamische Anpassung der Inhalte an den aktuellen Benutzerkontext, was ein tiefes Verständnis der Vorlieben und Bedürfnisse des Benutzers ermöglicht.

Die KI erfasst und integriert unterschiedliche Datenquellen, wie Benutzereingaben, bisherige Interaktionen, Standortinformationen oder Zeitangaben, um ein umfassendes Bild des Benutzerkontextes zu erstellen. Durch maschinelles Lernen (ML) wird die KI trainiert, relevante Muster und Verhaltensweisen aus diesen Daten zu erkennen und den aktuellen Zustand des Benutzers präzise zu erfassen. So kann die KI beispielsweise frühere Interessen und aktuelle Bedingungen miteinander abgleichen, um Vorhersagen über die wahrscheinlichsten Themen zu treffen, die den Benutzer ansprechen könnten.

Innerhalb der KI-Architektur kommen erfindungsgemäß verschiedene Techniken zum Einsatz, darunter NLP zur Analyse von Texteingaben und ML-Algorithmen zur Mustererkennung und Personalisierung. NLP wird genutzt, um Schlüsselthemen und Emotionen in den Benutzereingaben zu identifizieren, wodurch die KI Vorschläge auf eine Weise formulieren kann, die den Benutzer anspricht.

ML-Algorithmen lernen durch frühere Interaktionen, welche Vorschläge für den Benutzer besonders relevant waren, und passen die Vorschläge in Echtzeit an, basierend auf aktuellen und vorherigen Kontextinformationen. Diese kontinuierliche Lernfähigkeit stellt sicher, dass die KI ihre Genauigkeit und Relevanz im Laufe der Zeit verbessert.

Durch die erfindungsgemäße KI-Algorithmen erfolgt dann nachfolden ein Generieren einer oder mehrerer personalisierter Vorschläge basierend auf der Analyse der Kontextinformationen, wobei die Vorschläge spezifisch auf die ermittelten Themen oder Interessen des Benutzers abgestimmt sind.

Diese werden dem Benutzer in Form einer sprachliche, textlichen, haptischen und/oder bildlichen Ausgabe bereitgestellt und seine Reaktion auf die generierte Ausgabe erfasst und weiter verarbeitet.

Erfindungsgemäß kann es vorgesehen sein, dass das Ermitteln von Kontextinformationen des Benutzers durch Rückfragen eines digitalen Avatars, der den Benutzer mittels Audio- und/oder Video anspricht.

Ein erfindungsgemäßer digitaler Avatar kann in der Kommunikation mit Menschen vorteilhaft sein, weil er die Interaktion persönlicher und ansprechender gestaltet. Avatare können durch Mimik, Gestik und Sprache menschliche Eigenschaften simulieren, was das Verständnis und die emotionale Bindung der Benutzer fördert.

Erfindungsgemäß kann es vorgesehen sein, dass ein Avatar eine freundliche und oft vertrauensvolle Atmosphäre schafft, die den Benutzer dazu ermutigt Informationen auszutauschen.

Auch kann es gemäß einer Ausführungsform der Erfindung vorteilhaft sein, dass Avatare Informationen dynamisch präsentieren und an den jeweiligen Benutzer anpassen, was das Kommunikationsgefühl interaktiver und natürlicher macht.

Gemäß einer Ausführungsform der vorliegenden Erfindung kann vorgesehen sein, dass die Eingaben des Benutzers mittels Text, haptischer Eingaben, Sprache und/oder visueller Erfassung erfolgen, wobei insbesondere eine Tastatur, eine Maus, ein Trackpad, ein Mikrofon, eine Kamera und/oder eine Sensoreinrichtung zum Erfassen von Bewegungen zum Einsatz kommt.

Die Nutzung unterschiedlicher Eingabeeinrichtungen wie Tastatur, Maus, Trackpad, Mikrofon, Kamera und Sensoreinrichtungen ermöglicht eine vielseitige und benutzerfreundliche Interaktion gemäß dem vorliegenden erinfdungsgemäßen Verfahren.

Diese Vielzahl an Eingabemöglichkeiten gibt dem Benutzer die Flexibilität, die Methode zu wählen, den er für seine jeweilige Umgebung und Präferenzen am besten geeignet hält.

Die Tastatur bietet eine präzise und textbasierte Eingabe, während die Maus und das Trackpad eine intuitive Navigation und Selektion erlauben. Diese haptischen Eingabemethoden sind besonders hilfreich, wenn Benutzer eine hohe Kontrolle und Genauigkeit über ihre Eingaben benötigen, etwa bei der Bearbeitung von Texten oder bei der Auswahl von Optionen auf einem Bildschirm.

Jedoch gibt es auch eine Vielzahl von Situation, wo die Verwendung von Tastatur und/oder Maus nicht zielführend sind, beispielsweise beim Spazierengehen, Autofahren, etc.

Auch gibt es körperlich eingeschränkte Benutzer, denen der Umgang mit Tastatur und Maus schwer fällt oder die einfach über schlechtere visuelle Erfassungsfähigkeiten verfügen.

In disen Fällen und/oder für eingeschränkte Benutzer kann eine Spracheingabe über ein Mikrofon eine schnelle und natürliche Form der Interaktion darstellen, die insbesondere in Situationen, in denen haptische Eingaben schwierig oder zeitaufwändig sind, erhebliche Vorteile bietet.

Sie ermöglicht es dem Benutzer, komplexe Anfragen oder Anweisungen einfach per Sprachbefehl zu übermitteln, was den Bedienkomfort erhöht und die Effizienz der Interaktion verbessert. Gleichzeitig fördert die Spracheingabe eine barrierefreie Nutzung für Menschen, die in ihrer Mobilität eingeschränkt sind oder Schwierigkeiten beim Tippen haben.

Schließlich erweitern Kameras und Sensoreinrichtungen, die gemäß der vorliegenden Erfindung ebenfalls optional vorgesehen sind, die Möglichkeiten der Eingabe durch visuelle Erkennung und Bewegungserfassung. Die Kamera kann beispielsweise zur Gesichtserkennung oder zur Erfassung von Gesten genutzt werden, während Sensoreinrichtungen Bewegungen des Benutzers erkennen und interpretieren können.

Diese Eingabemethoden ermöglichen eine intuitive, berührungslose Steuerung, die besonders in Umgebungen nützlich ist, in denen der Benutzer keine direkten physischen Eingaben vornehmen kann.

Die Kombination dieser verschiedenen Eingabemethoden ermöglicht es dem erfindungsgemäße Verfahren, eine individuelle, nahtlose Interaktion anzubieten.

Gemäß einer Ausführungsform der vorliegenden Erfindung kann vorgsehen sein, dass Informationen über einen oder mehrerer Benutzer oder eine Benutzergruppe eingegeben oder ermittelt werden, insbesondere umfassend, ob es sich um eine Einzelperson, eine Gruppe von Personen oder eine Organisation handelt, und/oder Eigenschaften des oder der Benutzer, insbesondere umfassend Alter, Geschlecht, Gesundheitszustand.

Diese Ermittlung erfolgt bevorzugt vor Schritt a), kann jedoch laufend stattfinden.

Dabei kann es insbesondere vorteilhfat sein, dass ein Algorithmus unter Einsatz von KI unter Bereitstellung eines Fotos, einer Audiodatei, einer Video-Aufzeichnung und/oder eine audio- oder audiovisuallen Kommunikation mit dem Benutzer die Informationen und/oder Eigenschaften des oder der Benutzer ermittelt.

Das beschriebene Verfahren, das Informationen über einzelne Benutzer oder Benutzergruppen, einschließlich ihrer Eigenschaften, erfasst und nutzt, bringt erhebliche Vorteile für eine präzise und kontextgerechte Anpassung der Systeminteraktionen. Die Möglichkeit, dem System mitzuteilen, ob es sich bei der Nutzung um eine Einzelperson, eine Gruppe oder eine Organisation handelt, ermöglicht eine bessere Anpassung der Vorschläge und Ausgaben an die jeweilige Konstellation.

So kann das System bei einer Gruppe von Benutzern etwa verschiedene Interessen und Präferenzen berücksichtigen oder gemeinsame Interaktionen fördern, während es bei einer Einzelperson gezielt auf individuelle Bedürfnisse eingeht.

Eine Gruppe von Personen im Sinne der vorliegenden Erfindung kann zum Beispiel eine Familie oder ein Freundeskreis sein, die bestimmte Erlebnisse, Ereignisse oder Reisen gemeinsamt dokumentieren und aufzeichnen wollen.

Bei Organisationen könnten spezifische organisatorische Bedürfnisse berücksichtigt werden, um relevante Inhalte anzubieten.

Bei einer Organisation im Sinne der vorliegenenden Erfindung kann es sich um ein Unternehmen, einen Verein, oder dergleichen handeln, die z.B. eine Vereinschronik erstellen wollen.

Neben dem Erfassung der Anazhl der Benutzer und der Nutzerart ist es gemäß einer Ausführungsform der vorliegenden Erfindung vorteilhaft, spezifische Eigenschaften der Benutzer wie Alter, Geschlecht und Gesundheitszustand zu erfassen, da diese Informationen die Personalisierung und Relevanz der Inhalte erhöhen.

So kann das System beispielsweise altersgerechte Inhalte bereitstellen oder auf gesundheitliche Aspekte Rücksicht nehmen, falls die Informationen auf das Wohlbefinden der Benutzer abzielen.

Gemäß des erfindungsgemäßen Verfahrens kann dies eingegeben werden, vom dem oder den Benutzern selbst oder von Dritten. Es kann allerdings vorteilhaft sein, dass die Ermittlung dieser Benutzerinformationen und -eigenschaften mithilfe eines KI-gestützten Algorithmus sowie die Möglichkeit zur Bereitstellung von Foto-, Audio- oder Videodateien zur Identifizierung dieser Eigenschaften erfolgt.

Die KI kann beispielsweise anhand eines Fotos das geschätzte Alter, das Geschlecht oder die Stimmung des Benutzers erkennen und somit auf gezielte, bedarfsgerechte Interaktionen hinwirken.

Audiodateien oder Videos ermöglichen eine Analyse der Stimme und Körpersprache, wodurch das System auch emotionale Zustände oder präferierte Kommunikationsstile identifizieren könnte.

Diese KI-gestützte Analyse sorgt dafür, dass die Informationen über den Benutzer in Echtzeit aktualisiert und genutzt werden, was eine dynamische und individuell abgestimmte Anpassung der Inhalte und Kommunikationsweisen erlaubt. Dies erhöht die Effizienz und Relevanz der Antworten des erfindungsgemäßen Algorithmusses und ermöglicht eine auf den Benutzer zugeschnittene Interaktion.

Es kann gemäß einem Ausführungsbeipiel der Erfindung vorgesehen sein, dass eine Kontextinformation für den Benutzer oder eine Kontextinformation über den Benutzer von einer weiteren Person eingegeben wird.

Es kann vorteilhaft sein, wenn ein weiterer Benutzer dem erfindungsgemäßen Algorithmus Informationen eingibt, z.B. Fragen stellt oder eine weitere Person anlegt. Beispielsweise kann der weitere Benutzer gezielt Fragen aus der Vergangenheit oder zu weiteren Bezugspersonen stellt.

Des weiteren kann es erfindungsgemäß bevorzugt sein, dass Kontextinformationen durch gezielte Fragen des Algorithmusses an den Benutzer gewonnen werden, in dem Fragen zu Orten, Interessen und/oder Personen gestellt werden.

Es kann vorgesehen sein, dass bei Nennenung einer Person Fragen zu dieser Person seitens der erfindungsgemäßen Algorithmusses generiert werden, z.B. woher der Benutzer sie kannt, wie alt sie ist, wo sie her kommt, etc.

Ebenso können solche kontextbasierten Rückfragen zur Kunst/Künstlern, Sport/Sportlern, etc. unterstützend wirken.

Auch liefert die Erfindung ein System, umfassend ein Datenverarbeitungseinrichtung sowie eine Eingabe und eine Ausgabeeinrichtung, ausgelegt und eingerichtet zum Durchführen eines erfindungsgemäßen Verfahrens.

Schließlich liefert die Erfindung die Verwendung eines erfindungsgemäßen Verfahrens oder eines erfndungsgemäßen Systems zur Interaktion mit einem Benutzer zum strukturierten Erfassen von Erinnerungen des Benutzers. Dabei kann es vorgesehen sein, dass die erfassten Erinnerungen textuell oder multimedial aufbereitet anzeigbar sind, wobei die Aufbereitung mit Hilfe von Algorithmen unter Einsatz von KI erfolgt.

Das vorliegende erfindungsgemäße Verfahren wird nunmehr anhand eines Ausführungsbeispiels näher erläutert.

Bei dem Benutzer handelt es sich beispielsweise um einen älteren Herren, dessen Kinder möchten, dass er Erinnerungen betreffend sein Leben systematisch erfasst. Hierzu soll das erfindungsgemäße Verfahren genutzt, um strukturiert vorgehen zu können.

Im ersten Schritt gemäß dem erfindungsgemäßen Verfahren werden die für den Benutzer relevanten Kontextinformationen erfasst.

Hierzu kann das erfindungsgemäße Verfahren wie ausgeführt auf Benutzerdaten, Benutzereingaben, gespeicherten Informationen und/oder Umgebungsbedingungen generiert werden.

Es kann daher beispielhaft vorgesehen sein, dass die Kinder des Benutzer ein Profil des Benutzer anlegen und sein Alter, Geburtsort, Wohnorte, sowie familiäre Informationen zu Lebenspartnern, Eltern, Gechwistern und Beruf umfassend angeben.

Alterantiv kann das erfindungsgemäße Verfahren und mit minimalen relevanten Kontextinformationen beginnen und dann die notwendigen weiteren Kontextinformationen im Laufe des Verfahrens selber gewinnen. Wird beispielsweise minimal nur ein Foto des Benutzers bereitgestellt oder vom System selbst aufgenommen, kann daraus bereits mit Hilfe der erfindungsgemäßen Algorithmen ein Startpunkt der relevanten Kontextinformationen bestimmte werden, wie ungefähres Alter, Geschlecht, etc.

Basierend auf diesen sehr kleinen, mittleren oder sehr umfangreichen Kontextinformationen identifiziert der erfindungsgemäße Algorithmus unter Einsatz von KI relevante Themen, Ideen und/oder Anregungen, die geeignet sind, den Benutzer zur weiteren Dateneingabe anzuregen und adressiert den Benutzer entsprechend.

Durch eine Wiederholung der Schritte aus interaktiven Benutzereingaben und Rückfragen entsteht ein Dialog.

Erfindungsgemäß kann dieser Dialog durch die Eingabe weiterer Personen ergänzt werden, z.B. wenn im vorliegenden Beispiel eines der Kinder ein gezielte Frage dem Verfahren eingibt: "Wie war damals eigentlich Dein Hochzeitstag?". Diese Frage wird dann den relevanten Kontextinformationen hinzugefügt und wenn es das System für relevant hält an den Benutzer in einer optimal aufbereiteten Form weitergebeben.

Alternativ können diese Informationen auf einer Art "To-Do-Liste" angezeigt werden, und der Benutzer kann selber entscheiden, wann er sich diesen Fragen widmen möchte.

Die Aufbereitung der Informationen erfolgt wiederum durch einen erfindungsgemäßen Algorithmus unter Einsatz von KI. Hier kann sowohl eine textuellle als auch eine multimediale Aufbereitung erfolgen. Es kann auch vorgesehen sein, dass aus bestimmten relevanten Kontextinformationen neue Fotos und/oder Videos generiert werden können, um die Aufbereitung abzurunden.

Das erfindungsgemäße Verfahren ermöglicht somit wie an dem examplarischen Beispiel gezeigt, dass ein Benutzer auch ohne technische Fähigkeiten und ggf. mit körperlichen Einschränkungen umfassend mittels Audio- und ggf. Videokommunikation strukturiert angeregt werden kann, Erinnerungen einem System beizufügen, während diese Eingaben wiederum genutzt werden, das Verfahren noch weiter optimiert fortzusetzen. Dabei können Dritte aktiv an dem Porzess mitwirken und am Anfang oder laufend relevante Kontextinformationen zusätzlich eingeben.

Die eingebeben relevanten Kontextinformationen werden wiederum strukturiert und effzient aufbereitet und in verschiedenen technischen Ausgabenformen, wie Audio, Video und/oder Text, dem Benutzer und ggf. weiteren Nutzern zur Verfügung gestellt.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zum Erfassen, Aufbereiten und Darstellen von Daten unter Verwendung einer Künstlichen Intelligenz (KI), umfassend die folgenden Schritte:
a) Ermitteln von für einen Benutzer relevanten Kontextinformationen, die auf Basis von Benutzerdaten, Benutzereingaben, gespeicherten Informationen und/oder Umgebungsbedingungen generiert werden;
b) Analysieren der Kontextinformationen mittels eines Algorithmus unter Einsatz von KI, um relevante Themen, Ideen und/oder Anregungen zu identifizieren, die geeignet sind, den Benutzer zur weiteren Dateneingabe anzuregen;
c) Generieren einer oder mehrerer personalisierter Vorschläge basierend auf der Analyse der Kontextinformationen, wobei die Vorschläge spezifisch auf die ermittelten Themen oder Interessen des Benutzers abgestimmt sind;
d) Automatisches Bereitstellen der generierten Vorschläge an den Benutzer in Form einer sprachliche, textlichen, haptischen und/oder bildlichen Ausgabe,
e) Erfassen von Eingaben des Benutzers in Reaktion auf die generierte Ausgabe.

2. Verfahren nach Anspruch 1, **gekennzeichnet durch**
das Ermitteln von Kontextinformationen des Benutzers durch Rückfragen eines digitalen Avatars, der den Benutzer mittels Audio- und/oder Video anspricht.

3. Verfahren nach Anspruch 1 oder Anspruch 2, **dadurch gekennzeichnet, dass** die Eingaben des Benutzers mittels Text, haptischer Eingaben, Sprache und/oder visueller Erfassung erfolgen, wobei insbesondere eine Tastatur, eine Maus, ein Trackpad, ein Mikrofon, eine Kamera und/oder eine Sensoreinrichtung zum Erfassen von Bewegungen zum Einsatz kommt.

4. Verfahren nach einen der vorangehenden Ansprüche, **dadurch gekennzeichnet, dass**
Informationen über einen oder mehrerer Benutzer oder eine Benutzergruppe eingegeben oder ermittelt werden, insbesondere umfassend, ob es sich um eine Einzelperson, eine Gruppe von Personen oder eine Organisation handelt, und/oder Eigenschaften des oder der Benutzer, insbesondere umfassend Alter, Geschlecht, Gesundheitszustand.

5. Verfahren nach Anspruch 4, **dadurch gekennzeichnet, dass** ein Algorithmus unter Einsatz von KI unter Bereitstellung eines Fotos, einer Audiodatei, einer Video-Aufzeichnung und/oder eine audio- oder audiovisuallen Kommunikation mit dem Benutzer die Informationen und/oder Eigenschaften des oder der Benutzer ermittelt.

6. Verfahren nach Anspruch 4 oder 5, **dadurch gekennzeichnet, dass** eine Kontextinformation für den Benutzer oder eine Kontextinformation über den Benutzer von einer weiteren Person eingegeben wird.

7. Verfahren nach einen der vorangehenden Ansprüche, **dadurch gekennzeichnet, dass**
Kontextinformationen durch gezielte Fragen des Algorithmusses an den Benutzer gewonnen werden, in dem Fragen zu Orten, Interessen und/oder Personen gestellt werden.

8. System, umfassend ein Datenverarbeitungseinrichtung sowie eine Eingabe und eine Ausgabeeinrichtung, ausgelegt und eingerichtet zum Durchführen eines Verfahrens nach einem der vorangehenden Ansprüche.

9. Verwendung eines Verfahren nach einem der Ansprüche 1 bis 7 oder eines Systems nach Anspruch 8 zur Interaktion mit einem Benutzer zum strukturierten Erfassen von Erinnerungen des Benutzers.

10. Verwendung nach Anspruch 9, wobei die erfassten Erinnerungen textuell oder multimedial aufbereitet anzeigbar sind, wobei die Aufbereitung mit Hilfe von Algorithmen unter Einsatz von KI erfolgt.
